# EUROPEAN PATENT SPECIFICATION

(11) **EP 3 385 095 B1**
(45) Date of publication and mention of the grant of the patent: **14.07.2021**
(21) Application number: 18163145.8
(22) Date of filing: 21.03.2018
(51) Int. Cl.: B60C 9/28, B60C 9/20

(54) **ULTRA SUPER SINGLE TIRE FOR HEAVY DUTY**
ULTRASUPEREINZELREIFEN FÜR SCHWERLAST
ULTRA SUPER PNEU UNIQUE POUR FORTES CHARGES

(30) Priority: 04.04.2017 KR 20170043868
(43) Date of publication of application: 10.10.2018
(73) Proprietor: Hankook Tire Co., Ltd., Seoul 135-723 (KR)
(72) Inventor: Lee, Dong gyu, 34119 Daejeon (KR); Bae, Sung ryul, 34119 Daejeon (KR)
(74) Representative: Petraz, Gilberto Luigi

(56) References cited:
- EP-A1- 2 623 336
- CN-A- 104 960 389
- US-B2- 6 959 746

## Description

### BACKGROUND OF THE INVENTION

### 1. Field of the Invention

The present invention relates to an ultra super single tire for heavy duty, and more particularly, the invention relates to an ultra super single tire for heavy duty, which has an increased ground contact length at the ground contacting center and has enhanced durability at the edges of the belt layer.

### 2. Description of the Related Art

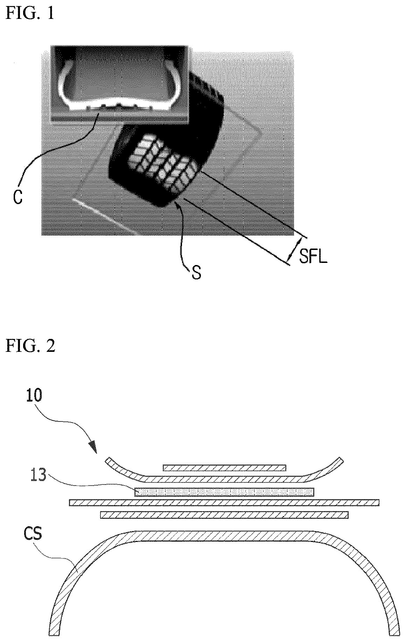

Regarding tires for heavy duty, ultra super single (USS) tires that replace dual wheel tires with single wheel tires have been used. As more of wide-base tires are used, there is a problem that the footprint shape becomes unstable, and the performance of tires is deteriorated. That is, tires for heavy duty have a problem that, as shown in FIG. 1, a phenomenon in which the ground contacting center (C) of the tread(S) is depressed occurs, and the shoulder side footprint length (SFL) is increased so that deterioration of the stability of steering and belt durability, as well as abnormal wear occur. Particularly, a heaving phenomenon caused by decreased rigidity at the ground contacting center occurs, and belt failures caused by an increase in the air distribution ratio at the tread have emerged as a critical problem.

In order to solve the problems such as described above, a technology of increasing the ground contact length at the tread center and decreasing the ground contact length on the shoulder sides has been developed. That is, there have been suggested a technology of inserting a rubber sheet into the tread center portion as disclosed in Korean Unexamined Patent Application No. 10-2011-0049422 (date of publication: May 12, 2011), a technology of increasing the rubber thickness at the tread center, a technology of inserting an infinite coil into the tire tread portion, and a technology of inserting a waved belt into the tread center portion.

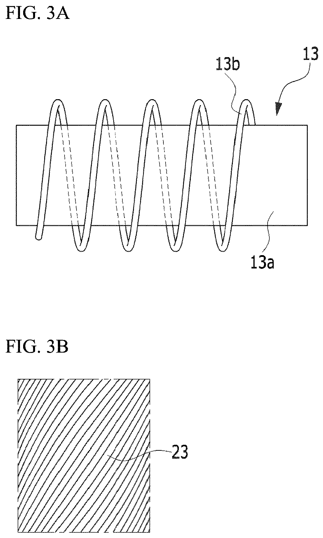

Furthermore, as illustrated in FIG. 2, a five-layer belt (four belts + S belt) (10) structure in which a spiral coil belt (13) is included as a third layer on the carcass (CS) has been conventionally disclosed. A spiral coil belt (13) is a belt having a structure in which a single wire (13b) is continuously wound around a belt drum (13a) as illustrated in FIG. 3A, and this spiral coil belt is distinguished from a sheet type belt (23) that has been processed into a sheet form such as illustrated in FIG. 3B and contains cut wires.

However, the technology of inserting a rubber sheet into the tread center portion has a problem that the tire weight is excessively increased, excessive heat generation occurs, durability of the tire is decreased, and the insertion effects are negligible. The technology of increasing the rubber thickness at the tread center has a problem that the tire weight is increased, and the effects are negligible.

Furthermore, the technology of inserting a helical coil into the tire tread portion has a problem that the insertion effects are negligible. In the structure including a spiral coil belt as shown in FIG. 2, the belt durability and the footprint shape have been improved; however, there is a problem that as the air pressure allotment ratio increases, durability of the belt portion is decreased. The structure including a spiral coil belt of FIG. 2 is a five-layer belt structure; however, in the case of the belt edges, there is no substantial difference between the five-layer belt structure and a four-layer belt structure, and therefore, there is problem that the extent of risk has been rather increased.

Furthermore, the technology of attaching a waved belt to the belt layer of the tire has a problem that the waved belt moves unnecessarily during driving, and durability of the tire is deteriorated.

Document EP-A-2.623.336 discloses a pneumatic tire having a carcass, a circumferential belt layer provided on the outer side in the tire radial direction of the carcass, and plural intersecting belt layers provided on the outer side in the tire radial direction of the circumferential belt layer. At least one of the plural intersecting belt layers has wider belt width in the tire widthwise direction than the circumferential belt layer. The pneumatic tire further comprises a layer of end-portion circumferential belt provided in respective tire widthwise tread end regions on the outer side of the carcass and on the inner side of the circumferential belt layer in the tire radial direction; and a layer of slant belt provided in the tire widthwise tread central region on the outer side of the carcass and on the inner side of the circumferential belt layer in the tire radial direction.

Document US-B-6,959,746 discloses a pneumatic tire including a carcass, a belt arranged at the outside of the carcass in a radial direction and having two belt layers, a belt reinforcing layer arranged so as to overlap with the belt and extend over a widthwise outer end thereof, and a tread rubber arranged at the outside of the belt in the radial direction. A pair of split auxiliary belt layers are arranged so as to overlap with both widthwise outer end portions of a widest-width belt reinforcing layer. Reinforcing elements having an inclination angle different from that of reinforcing elements in the belt reinforcing layer are embedded in the split auxiliary belt layer for decreasing the wearing rate at the tread end portion of the tire to effectively control irregular wear.Document CN-A-104960389 discloses a tire belt ply structure located between a tread and a tire body, and comprises middle belt plies and side belt plies; the middle belt plies include a first middle belt ply fitted on the tire body, a second middle belt ply fitted on the outer end face of the first middle belt ply, a third middle belt ply fitted on the outer end face of the second middle belt ply and a fourth middle belt ply fitted on the outer end face of the third middle belt ply; the side belt plies include two first side belt plies arranged on the two sides of the first middle belt ply, two third side belt plies arranged on the two sides of the third middle belt ply, and two fourth side belt plies arranged on the two sides of the fourth middle belt ply; the belt ply structure is entirely symmetrical along the center line of the tread.

### SUMMARY OF THE INVENTION

The present invention was contrived in order to solve problems such as described above, and an object of the invention is to provide an ultra super single tire for heavy duty, which has a four-layer belt structure while the order of lamination of the helical coil has been changed, the ground contact length of the ground contacting center has been further increased by means of a wide spiral coil belt having an increased width and an extender belt, and durability at the edges of the belt layer has been further enhanced.

In order to solve the problems described above, the ultra super single tire for heavy duty according to an embodiment the present invention includes a tread that contacts the road surfaces; a carcass that constitutes the skeleton of the tire; and a belt layer that is disposed between the tread and the carcass, in which the belt layer is composed of a first belt to a fourth belt laminated sequentially from the carcass toward the tread, the first belt includes an extender belt, and the second belt is a wide spiral coil belt.

When the level difference between an edge of the third belt and an edge of the wide spiral coil belt (second belt) is designated as S1, the level difference between an edge of the wide spiral coil belt (second belt) and an edge of the extender belt is designated as S2, and the width of the extender belt is designated as EBw, the following relations are satisfied: 7.5 mm < S1 < 15 mm, 20 mm < S2, and 20 mm < EBw.

The angle of inclination at an edge of a first main belt of the first belt is in the range of 50° ± 5°, the angle of inclination at an edge of the wide spiral coil belt (second belt) is 0°, and the angle of inclination at an edge of the third belt and the angle of inclination at an edge of the fourth belt is in the range of 18° ± 5°.

The angle of inclination of the extender belt is different from the angle of inclination at an edge of the first main belt of the first belt. The angle of inclination of the extender belt is in the range of 10° ± 5°.

When the ultra super single tire for heavy duty according to the present invention such as described above is used, effects of preventing excessive increase of the weight, preventing the occurrence of excessive heat generation, preventing deterioration of durability, further increasing the ground contact length of the ground contacting center, and further enhancing the durability of edges of belt layers, are obtained by means of a wide spiral coil belt having a four-layer belt structure, in which the order of lamination of the helical coil has been changed and the width has been increased, and by means of an extender belt.

### BRIEF DESCRIPTION OF THE DRAWINGS

FIG. 1 is a diagram showing the footprint shape and the bend shape resulting from widening of a conventional tire fir heavy duty.
FIG. 2 is a diagram schematically illustrating a tire having a five-layer belt (four belts + S belt) structure including a conventional spiral coil belt as a third layer.
FIG. 3A is a schematic diagram illustrating the spiral coil belt of FIG. 2, and FIG. 3B is a schematic diagram illustrating a conventional sheet type belt.
FIG. 4 is a diagram schematically illustrating a tire having a belt structure including the wide spiral coil belt and the extender belt according to an embodiment of the present invention.
FIG. 5 is a diagram showing a cross-section of the tread in order to explain the belt laminate structure of FIG. 4.
FIG. 6 is an explanatory diagram for explaining the wide spiral coil belt of FIG. 5.
FIG. 7 is a table of comparison showing a comparison of the shear strain distributions for the belt structure of FIG. 2 (conventional) and a deformed belt structure in which the position of the spiral coil belt has been changed.
FIG. 8 is a table of comparison showing a comparison of the shear strain distributions between belt layers in the belt structure of FIG. 2 (conventional) and the belt structure of FIG. 4 (present invention).
FIG. 9 is a table of comparison showing a comparison of the footprint shapes of the belt structure of FIG. 2 (conventional) and the belt structure of FIG. 4 (present invention).

### DETAILED DESCRIPTION OF THE PREFERRED EMBODIMENTS

Hereinafter, preferred embodiments of the present invention will be described in detail with reference to the attached drawings. However, this explanation is intended to describe the present invention in detail to the extent that those ordinarily skilled in the art to which the present invention is pertained can easily carry out the present invention, and it does not mean that the technical idea and scope of the present invention will be limited by the preferred embodiments. The invention is only limited within the scope of the appended claims.

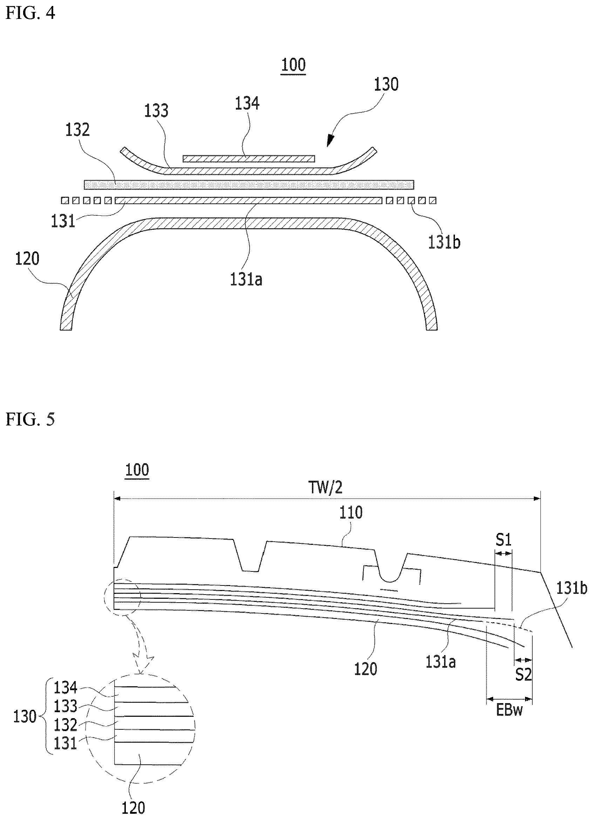

FIG. 4 is a diagram schematically illustrating a tire having a belt structure including the wide spiral coil belt and the extender belt according to an embodiment of the present invention, and FIG. 5 is a diagram showing a cross-section of the tread for explaining the belt laminated structure of FIG. 4.

According to FIG. 4 and FIG. 5, the ultra super single tire for heavy duty (100) according to an embodiment of the present invention includes a tread (110) that contacts the road surface, a carcass (120) that constitutes the skeleton of the tire, and a belt layer (130) that is disposed between the tread (110) and the carcass (120).

The tread (110) is a part that contacts the ground surface (road surface) and is formed from a rubber material.

The carcass (120) is formed by stacking several sheets of cord plies formed from high-strength synthetic fibers, and forms the skeleton of the tire.

The belt layer (130) is disposed between the tread (110) and the carcass (120), and is composed of a first belt (131), a second belt (132), a third belt (133), and a fourth belt (134) disposed sequentially from the carcass (120) toward the tread (110). The first belt (131) is composed of a first main belt (131a) and an extender belt (131b), and the second belt (132) is formed from a wide spiral coil belt (WSC).

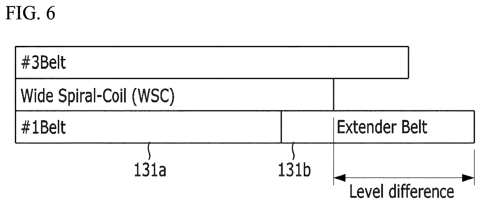

The extender belt (131b) is a belt made of a material that is identical or similar to that of the first main belt (131a), and is a belt extending from the first main belt (131a) only in the length in the width direction. The wide spiral coil belt (WSC) needs a level difference because in a case in which the belt is produced from spiral coils as illustrated in FIG. 6 (see FIG. 3A), the belt layer of the lower layer (#1 belt) should support the spiral coil of the upper layer. As such, a belt having a wider width than the belt layer of the lower layer (#1 belt) is the wide spiral coil belt (WSC), and the portion having an increased width in the belt layer of the lower layer in order to support the spiral coil of the upper layer is referred to as extender belt.

In FIG. 5, S1 represents the level difference between an edge of the third belt (133) and an edge of the wide spiral coil belt (second belt, 132), S2 represents the level difference between an edge of the wide spiral coil belt (second belt, 132) and an edge of the extender belt (131b), and EBw represents the width of the extender belt (131b). Their dimensional ranges are ranges satisfying the following relations: 7.5 mm < S1 < 15 mm, 20 mm < S2, and 20 mm < EBw. TW/2 represents the half tread width.

The angle of inclination at an edge of the first main belt (131a) of the first belt (131) is in the range of 50° ± 5°, the angle of inclination at an edge of the wide spiral coil belt (second belt, 132) is 0°, and the angle of inclination at an edge of the third belt (133) and the angle of inclination at an edge of the fourth belt are respectively in the range of 18° ± 5°.

The angle of inclination of the extender belt (131b) is different from the angle of inclination at an edge of the first main belt (131a) of the first belt (131), and the angle of inclination of the extender belt (131b) is in the range of 10° ± 5°.

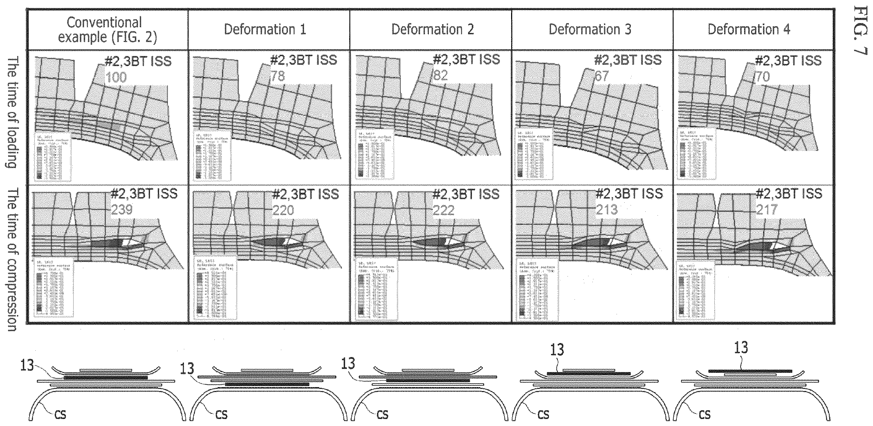

FIG. 7 is a table of comparison showing a comparison based on a computational analysis of the shear strain distributions for the belt structure of FIG. 2 (conventional) and a deformed belt structure in which the position of the spiral coil belt has been changed. FIG. 7 shows the shear strains generated at an edge of a belt layer at the time of compression and at the time of loading.

Deformation 1 shows a five-layer belt (four belts + S belt) structure including a spiral coil belt (13) as a first layer on the carcass (CS); Deformation 2 shows a five-layer belt (four belts + S belt) structure including a spiral coil belt (13) as a second layer on the carcass (CS); Deformation 3 shows a five-layer belt (four belts + S belt) structure including a spiral coil belt (13) s a fourth layer on the carcass (CS); and Deformation 4 shows a five-layer belt (four belts + S belt) structure including a spiral coil belt (13) as a fifth layer on the carcass (CS). As shown in the table, it can be seen that the interlaminar shear strain (ISS) occurring at the edges of the belt layers does not vary significantly with the order of lamination.

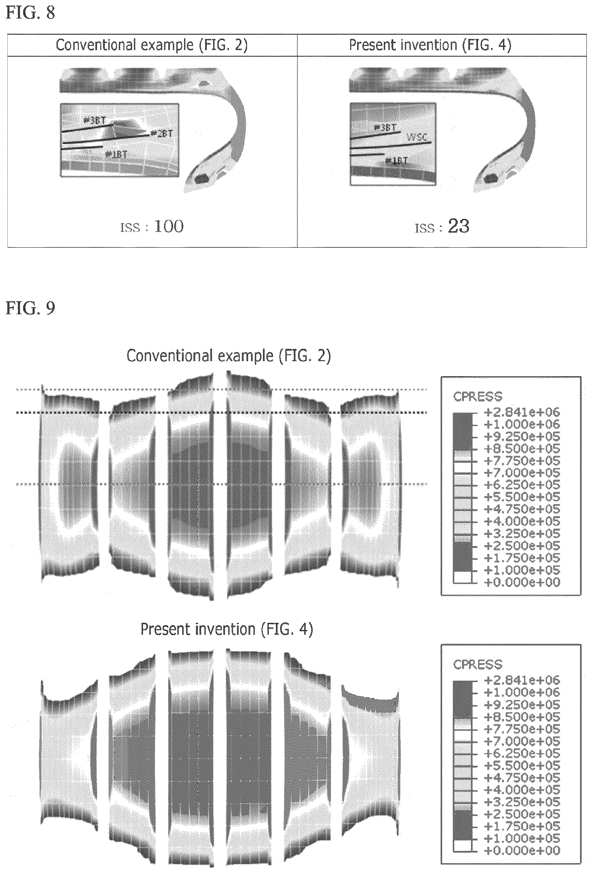

FIG. 8 is a table of comparison showing a comparison based on a computational analysis of the shear strain distributions between the belt layers in the belt structure of FIG. 2 (conventional) and the belt structure of FIG. 4 (present invention), and FIG. 9 is a table of comparison showing a comparison based on a computational analysis of the footprints of the belt structure of FIG. 2 (conventional) and the belt structure of FIG. 4 (present invention). The invention example disclosed in FIG. 8 and FIG. 9 are results obtained by performing an experiment with a belt structure in which S1 was 10 mm, S2 was 10 mm, EBw was 10 mm, the angle of inclination at an edge of the first main belt (131a) of the first belt (131) was 50°, the angle of inclination at an edge of the wide spiral coil belt (second belt, 132) was 0°, the angle of inclination at an edge of the third belt (133) and the angle of inclination at an edge of the fourth belt (134) were respectively 18°, and the angle of inclination of the extender belt (131b) was 10° (see FIG. 5).

As shown in FIG. 8, it can be seen that in the structure of an Example of the present invention (FIG. 4), the shear strain occurring at the belt edges was decreased by about 77% compared to the structure of a conventional example (FIG. 2). As shown in FIG. 7 as such, it is understood that the shear strain that conventionally occurs at belt edges does not occur in the Example of the present invention.

Furthermore, it can be seen that compared to the conventional example such as shown in FIG. 9, the ground contact length on the shoulder side is decreased in the Example of the present invention. Meanwhile, in a case in which an actual ultra super single tire is produced and experiments are performed with the tire, the ground contact length on the shoulder side can be minimized when the structure of the present invention, which is accompanied by a phenomenon in which the ground contact length increases significantly compared to a computational analysis, is applied.

The present invention has been explained with reference to the embodiments depicted in the diagrams; however, the embodiments are only for illustrative purpose, and a person having ordinary skill in the art to which the present invention is pertained will be able to understand that various modifications can be included in the present invention.

The invention is only limited within the scope of the appended claims.

### Reference Numerals

100: Ultra super single tire for heavy duty
110: Tread
120: Carcass
130: Belt layer
131: First belt
131a: First main belt
131b: Extender belt
132: Wide spiral coil belt (second belt)
133: Third belt
134: Fourth belt
S1: Level difference between edge of third belt and edge of wide spiral coil belt
S2: Level difference between edge of wide spiral coil belt and edge of extender belt
EBw: Width of extender belt
TW/2: Half tread width

## Claims

1. An ultra super single tire (100) for heavy duty, the ultra super single tire (100) comprising:
a tread (110) that contacts the road surface;
a carcass (120) that constitutes the skeleton of the tire (100); and
a belt layer (130) that is disposed between the tread (110) and the carcass (120),
wherein the belt layer (130) includes a first belt (131), a second belt (132), a third belt (133), and a fourth belt (134), which are laminated sequentially from the carcass toward the tread side,
the first belt includes a first main belt (131a) and an extender belt (131b) that extends from the first main belt (131a), and
the second belt (132) is made up of a wide spiral coil belt, wherein when the level difference in the width direction between an edge of the third belt (133) and an edge of the second belt (132) is designated as S1, the level difference in the width direction between an edge of the second belt (132) and an edge of the extender belt (131b) is designated as S2, and the width of the extender belt (131b) is designated as EBw,
the following relations are satisfied: 7.5 mm < S1 < 15 mm, 20 mm < S2, and 20 mm < EBw, wherein the angle of inclination at an edge of the first main belt (131a) is in the range of 50° ± 5°,
the angle of inclination at an edge of the second belt (132) is 0°,
**characterized in that**, the angle of inclination at an edge of the third belt (133) and the angle of inclination at an edge of the fourth belt (134) are respectively in the range of 18° ± 5°.

2. The ultra super single tire (100) for heavy duty according to claim 1, wherein the angle of inclination of the extender belt (131b) is different from the angle of inclination at an edge of the first main belt (131a) of the first belt.

3. The ultra super single tire for heavy duty according to claim 2, wherein the angle of inclination of the extender belt (131b) is in the range of 10° ± 5°.

## Patentansprüche

1. Ein Ultrasupereinzelreifen (100) für Schwerlast, wobei der Ultrasupereinzelreifen (100) folgendes aufweist:
ein Profil (110), das die Straßenoberfläche kontaktiert;
eine Karkasse (120), die das Skelett des Reifens (100) bildet; und
eine Gürtelschicht (130), die zwischen dem Profil (110) und der Karkasse (120) angeordnet ist,
wobei die Gürtelschicht (130) einen ersten Gürtel (131), einen zweiten Gürtel (132), einen dritten Gürtel (133) und einen vierten Gürtel (134) aufweist, welche sequenziell von der Karkasse zu der Profilseite hin laminiert sind,
der erste Gürtel weist einen ersten Hauptgürtel (131a) und einen Verlängerungsgürtel (131b), welcher sich von dem ersten Hauptgürtel (131a) erstreckt, auf, und
der zweite Gürtel (132) ist aus einem breiten Spiralspulengürtel aufgebaut,
wobei
wenn der Niveauunterschied in der Breitenrichtung zwischen einer Kante des dritten Gürtels (133) und einer Kante des zweiten Gürtels (132) als S1 bezeichnet wird, der Niveauunterschied in der Breitenrichtung zwischen einer Kante des zweiten Gürtels (132) und einer Kante des Verlängerungsgürtels (131b) als S2 bezeichnet wird, und die Breite des Verlängerungsgürtels (131b) als EBw bezeichnet wird,
die folgenden Beziehungen sind erfüllt: 7,5 mm < S1 <15 mm, 20 mm < S2, und 20 mm <EBw,
wobei
der Neigungswinkel an einer Kante eines ersten Hauptgürtels (131a) in dem Bereich von 50° ± 5° ist,
der Neigungswinkel an einer Kante des zweiten Gürtels (132) 0° ist,
**dadurch gekennzeichnet, dass** der Neigungswinkel an einer Kante des dritten Gürtels (133) und der Neigungswinkel an einer Kante des vierten Gürtels (134) jeweils in dem Bereich von 18° ± 5° sind.

2. Der Ultrasupereinzelreifen (100) für Schwerlast nach Anspruch 1, wobei sich der Neigungswinkel des Verlängerungsgürtels (131b) von dem Neigungswinkel an einer Kante des ersten Hauptgürtels (131a) des ersten Gürtels verschieden ist.

3. Der Ultrasupereinzelreifen für Schwerlast nach Anspruch 2, wobei der Neigungswinkel des Verlängerungsgürtels (131b) in dem Bereich von 10° ± 5° ist.

## Revendications

1. Pneumatique de type ultra super single (100) pour poids lourds, le pneumatique de type ultra super single (100) comprenant :
une bande de roulement (110) qui vient en contact avec la surface de la route ;
une carcasse (120) qui constitue le squelette du pneumatique (100) ; et
une couche de courroies (130) qui est disposée entre la bande de roulement (110) et la carcasse (120),
dans lequel la couche de courroies (130) comprend une première courroie (131), une deuxième courroie (132), une troisième courroie (133) et une quatrième courroie (134), qui sont stratifiées séquentiellement à partir de la carcasse vers le côté de la bande de roulement,
la première courroie comprend une première courroie principale (131a) et une courroie d'extension (131b) qui s'étend depuis la première courroie principale (131a), et
la deuxième courroie (132) se compose d'une large courroie hélicoïdale en spirale, dans lequel lorsque la différence de niveau dans la direction de largeur entre un bord de la troisième courroie (133) et un bord de la deuxième courroie (132) est désignée par S1, la différence de niveau dans la direction de largeur entre un bord de la deuxième courroie (132) et un bord de la courroie d'extension (131b) est désignée par S2, et la largeur de la courroie d'extension (131b) est désignée par EBw,
les relations suivantes sont satisfaites : 7,5 mm < SI < 15 mm, 20 mm < S2 et 20 mm < EBw, dans lequel
l'angle d'inclinaison au niveau d'un bord de la première courroie principale (131a) est dans la plage de 50° ± 5°,
l'angle d'inclinaison au niveau d'un bord de la deuxième courroie (132) est de 0°,
**caractérisé en ce que** l'angle d'inclinaison au niveau d'un bord de la troisième courroie (133) et l'angle d'inclinaison au niveau d'un bord de la quatrième courroie (134) sont respectivement dans la plage de 18° ± 5°.

2. Pneumatique de type ultra super single (100) pour poids lourds selon la revendication 1, dans lequel l'angle d'inclinaison de la courroie d'extension (131b) est différent de l'angle d'inclinaison au niveau d'un bord de la première courroie principale (131a) de la première courroie.

3. Pneumatique de type ultra super single pour poids lourds selon la revendication 2, dans lequel l'angle d'inclinaison de la courroie d'extension (131b) est dans la plage de 10° ± 5°.
